# EUROPEAN PATENT SPECIFICATION

(11) **EP 2 449 723 B1**
(45) Date of publication and mention of the grant of the patent: **06.09.2017**
(21) Application number: 10794410.0
(22) Date of filing: 01.07.2010
(51) Int. Cl.: H04Q 11/04, H04W 76/00, H04Q 3/62

(54) **SYSTEM AND METHOD FOR SETTING UP A CALL USING A GLOBAL REGISTRY**
SYSTEM UND VERFAHREN ZUM AUFBAU EINES RUFS MITHILFE EINER GLOBALEN REGISTRIERUNG
SYSTÈME ET PROCÉDÉ D'ÉTABLISSEMENT D'UN APPEL À L'AIDE D'UN REGISTRE GLOBAL

(30) Priority: 01.07.2009 NO 20092479
(43) Date of publication of application: 09.05.2012
(73) Proprietor: Cisco Systems International Sarl, 1180 Rolle (CH)
(72) Inventor: HANSEN, Robert, Slough Berkshire SL3 8L (GB); WITTY, Paul, Slough Berkshire SL3 8EX (GB)
(74) Representative: Kazi, Ilya
(86) International application number: PCT/NO2010/000256
(87) International publication number: WO 2011/002304

(56) References cited:
- EP-A1- 1 420 572
- EP-B1- 0 972 411
- GB-A- 2 432 475
- US-A1- 2002 136 222

## Description

### Field of the invention

The present invention relates to managing a global registry of contact information of communication device, and a method of setting up a call using the global registry of contact information.

### Background of the invention

For many decades, the standard means of real-time, long-distance communication has been the telephone, almost every individual within an organization will have a telephone number which is globally unique and from which they can reached by any telephone in the world.

In more recent years, calls via IP have been gaining prominence, as they have a number of advantages, they are usually free at the point of use, can offer better audio fidelity using high-quality audio codecs, allow video and data sharing as well as simply voice, etc. Where both circuit switched and packet switched systems are available, packet switched (IP) calls are generally made in preference to circuit switched (telephone) calls.

Currently, individuals generally provide their contact information in the form of a telephone number, which is short, globally unique, easy to use and works between organizations which have had no previous contact. However, this provides only the facility to make voice calls, and at a relatively low quality.

Within a network, many IP setups support ways of mitigating the complexity of making an IP media calls, e.g. preconfigured address books on an endpoint let a user call an individual by selecting them from a list. In other more sophisticated setups, endpoints register their availability to a central server which can then route calls as well as pushing out lists of users to the endpoints.

US-2002/0136222 describes a system that processes calls in an Internet Protocol (IP) communications network. The system includes a lightweight directory access protocol (LDAP) database, an LDAP sever, and a redirect server. The LDAP database stores a group of IP communication service attributes. The LDAP server receive a request for a database update, extracts the group of IP communication service attributes from the LDAP database, and transfers the extracted IP communication service attributes to the redirect server. The redirect server stores the extracted IP communication service attributes and processes a call using the stored IP communication service attributes.

Prior art solutions generally only work within an organization, since they rely on endpoints and servers having the information available to them already, as such they only allow individuals to call users whose details are already in the system.

This becomes problematic when an individual wishes to call a user from a different organization, one whose details are not already configured on the endpoints and servers. In this situation, the individual needs to know the call protocol and routing information of the organization to be called, as well as the identifier which will cause the call to be routed to the correct individual within the organization. The caller must also have enough technical understanding to configure his endpoint to make such a call, and the servers on.both ends of the call must be configured to make and receive calls through a common network, such as the Internet.

If, for some reason, the IP call cannot be successfully made, the caller must fall back to a standard telephone call, which requires a new call attempt to be made, with different contact information (the telephone number) and often on a different device entirely (a telephone rather than a video endpoint).

Therefore, there is a need in the art for a system coupling the familiarity and usability of contacting an individual in an external organization using their telephone number with the quality of a full IP call, including video and supplementary protocols when appropriate.

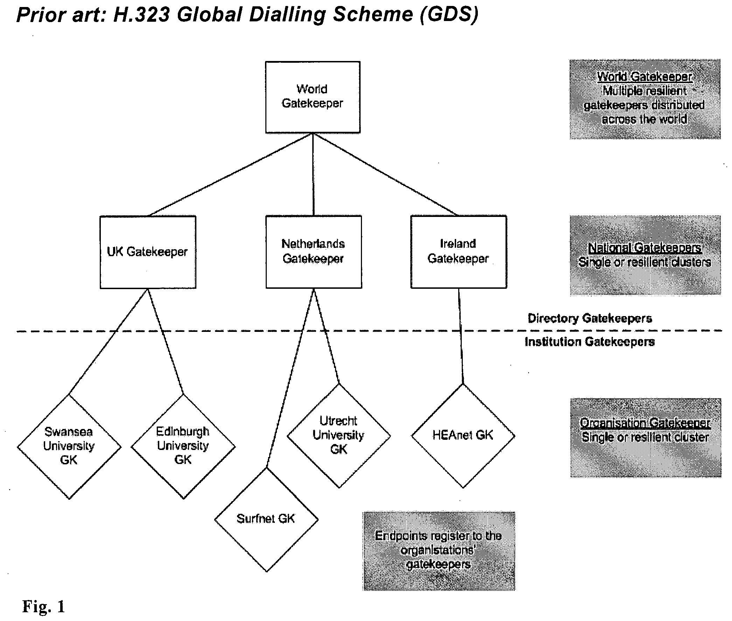

Telephone numbers are a long-established method of making telephone calls. They are arranged in a hierarchical fashion, with the world zone the first digit, followed by the country code, the national direct dialing code for regions within the country, and so on to greater and greater levels of specificity. Fig. 1 shows a H.323 Global Dialing Scheme (GDS) adopted by some countries, reusing the hierarchical system of telephone calls. The GDS utilizes a hierarchical system of Gatekeepers, wherein the prefixes indicates the gatekeeper level in the hierarchy, i.e. 00 indicates world gatekeeper, 0044 UK gatekeeper etc.

Call protocols (e.g., SIP, H.323) have standard ports (5060 for SIP UDP/TCP, 5061 for SIP TLS, 1720 for H.323) - so long as the organization to be called has used these there is no need for the port to be specified.

Some endpoints (Tandberg MXP, Lifesize) make multiple connection attempts with different call protocols from the same address, e.g. first trying SIP, then if not successfully answered, trying H.323. As the call attempts are made in sequence, and the later protocols are only tried once the previous have been rejected or timed out, this method has the disadvantages that it can be slow to connect or fail. The method might also not work for all addresses since different protocols use different forms of address (SIP uses a URI of the form username@hostname, H323 uses a hostname with an optional E164 number, etc).

The TANDBERG IP Gateway is a single point of entry for external IP calls, which can be presented with an auto-generated entry screen of options and/or routed using a dial-plan. It is designed to understand as many protocols as possible so that a user only had to publish its hostname to be externally contactable.

DNS is a long-established system for translating between a globally unique human-readable domain name and an IP address which can be used to contact a service provided on the Internet.

PBX systems such as Cisco Call Manager have substantial penetration of business organizations. They offer the facility to translate from their internal call protocol to standard telephone calls for external calls, as well as being able to make IP calls using protocols such as SIP by dialing a number into a phone, given the correct configuration.

EP 1 420 572 discloses a call establishment method. EP 972 411 discloses a method for establishing a communication link.

Aspects of the invention are recited in the independent claims and preferred features are set out in the dependent claims.

### Summary of the invention

It is an object of the present invention to provide methods, computer programs and a system for allowing an individual using an IP communication device to contact an individual in an external organization using a single identifier, such as a telephone number, without the caller having any knowledge of the IP capabilities of the called individual.

Call servers compatible with this new system will register the range of telephone numbers through which their users can be reached with an address registry or set of registries globally accessible via the Internet. When a user intends to make a call to an individual in an external organization, they enter the telephone number of the individual as if making a standard telephone call. The users calling client, or a call server acting on the client's behalf, then contacts the address registry, querying whether contact information is available for that number. If so, the registry returns the necessary contact information to make an IP media call to the organization, including the call protocols the organization supports, addresses, ports, etc.

If the calling system supports at least one of the protocols in use it can then use the contact information to seamlessly establish an IP call to the individual the user is attempting to contact, with all the inherent advantages of IP. However, if the no supported protocols are offered by the address registry, or the address registry contains no contact information associated with that telephone number, then the calling system can (without user intervention) fall back to making a standard telephone call to the original number input.

Even if a method of calling over IP is offered which the caller's system supports, should this fail due to a lack of network availability, the caller has the option to fall back to a telephone call as a last resort.

The features defined in the independent claims enclosed characterise the methods, the computer programs and the system.

### Brief description of the drawings

In order to make the invention more readily understandable, the discussion that follows will refer to the accompanying drawings, wherein:
Figure 1 shows the prior art hierarchal H.323 Global Dialing Scheme;
Figure 2 illustrates an exemplary communication system according the present invention;
Figure 3 illustrates exemplary structures of registries according to the present invention;
Figure 4 illustrates exemplary registration packets uploaded to a registry according to the present invention mobile communication device running the client application phone book list screen,and
Figure 5 is a flow chard showing an exemplary communication session according to the present invention.

### Detailed description

In the following, the present invention will be discussed by describing preferred embodiments, and by referring to the accompanying drawings. However, people skilled in the art will realize other applications and modifications within the scope of the invention as defined in the enclosed independent claims.

The present invention introduces a novel system and novel methods for allowing an individual using an IP communication device to contact an individual in an external organization using a single identifier, such as a telephone number, without the caller having any knowledge of the IP capabilities of the called individual. This is utilised by communicating with a registry device, e.g. a Global Address Database (GAD). The GAD contains contact information, such as IP capabilities, for registered numbers. When trying to make a call to a given number, a call server or similar at the site at the caller side, requests contact information relating to that number from the GAD, then sets up a call based on the information received from the GAD.

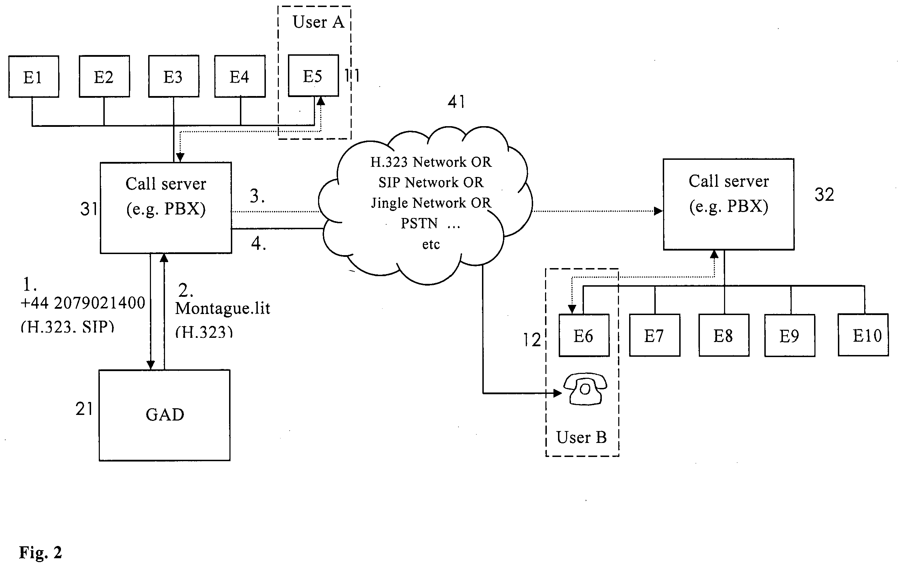

Figure 2 is a block diagram showing a typical configuration of a system according to the present invention.

The system comprises at least one GAD 21, a call server 31, a communication network 41, and two communication devices, 11 and 12. The communication network 41 is typically a packet switched network employing protocols such as H.323, SIP, Jingle etc, but could also be a circuit switched network such as PSTN. Similarly, the communication devices, 11 and 12, are typically communication devices supporting calls on at least one protocol such as H.323, SIP, Jingle etc, but could also be regular telephone. The call server 31 can be any kind of call server such as a PBX, a gateway, gatekeeper or an endpoint with integrated call server functionality.

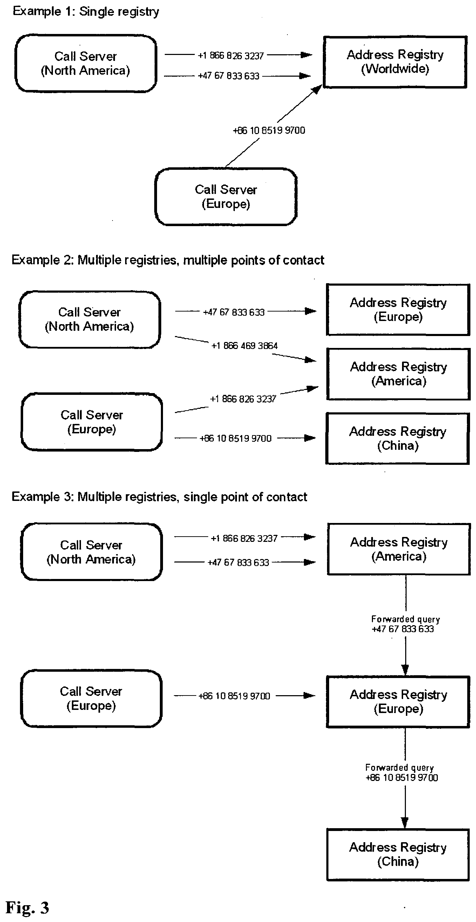

In one exemplary embodiment a single registry, e.g. GAD, can store and dispense all the contact information worldwide, Fig. 3 example 1.

However, with increased demand it may be more advantageous to employ multiple registries, reducing the load on any given registry. One exemplary embodiment of deploying multiple registries, Fig. 3 Example 3, is for any given calling device to have a single point of contact, in most cases the registry which is geographically closest, having the advantages of reducing the latency of a query, limiting transoceanic traffic, etc. In this embodiment, each registry is able to provide access to a complete set of records, either cached locally or by redirecting the caller to another registry when required. Mature strategies for implementing such systems, including failover and contact propagation between registries, have been developed for DNS.

As with GDS the nature of telephone numbers also allows other strategies to be implemented. In another exemplary embodiment, Fig.3 Example 3, the first few digits of a telephone number is used to determine the world zone of the destination, the country of the destination, and even more fine division. Hence a set of registries is set up, with the calling system contacting the registry corresponding to the geographical area signified by the telephone numbers they are seeking to identify. While this means that a caller may have to contact multiple registries rather than the single closest one to retrieve contact information for a number of international calls, it also means each registry need only store contact information for its geographical region, rather than the global totality of the contact details.

Obviously, many other strategies are also possible. No matter whether a single, global registry is used, or many registries, the syntax of queries and uploads of contact information will remain constant, allowing flexibility in the deployment of registries and giving the potential to migrate from one strategy to another should it seem advantageous to do so.

The Global Address Database (GAD) contains information associating a single identifier, in the following referred to as a telephone number, with IP contact information. The information is uploaded to the GAD from an uploading entity. The uploading entity might be a gatekeeper of an organization, but could also be an ordinary network connected computer. The telephone number is provided to the GAD as a single number or a range of numbers. Registering a range of numbers will generally be used to register a prefix (e.g., +47 67 833 000 to +47 67 833 999 corresponding to registering the prefix +47 67 833), but in the case where an organization has been allocated a range of telephone numbers rather than a simple prefix that allocated range will be registered (e.g., registering numbers in the range +47 67 833 200 to +47 67 833 700).

The uploading entity and any calling device receiving information from the GAD needs to understand the contact information, however, the GAD itself does not need to understand the information it contains. This has several advantages, one being that the GAD does not need to parse the contact information, thus leading to speeding up the request processing. Another advantage is that new protocols can be added to the registry without needing to update the registry itself.

In an exemplary embodiment of the invention, the GAD differentiates individual protocols, allowing the GAD to provide contact information requests with only the protocols the requesting entity is able to utilize, and also allowing an uploading entity to overwrite a single set of protocol data without needing to modify all the other sets of protocol data. Protocol data is thus paired with a protocol name field (e.g. SIP, H323, jingle etc.) identifying the protocol. Following that the GAD does not need to understand the protocols, there is no need for a pre-approved list over allowed protocol names.

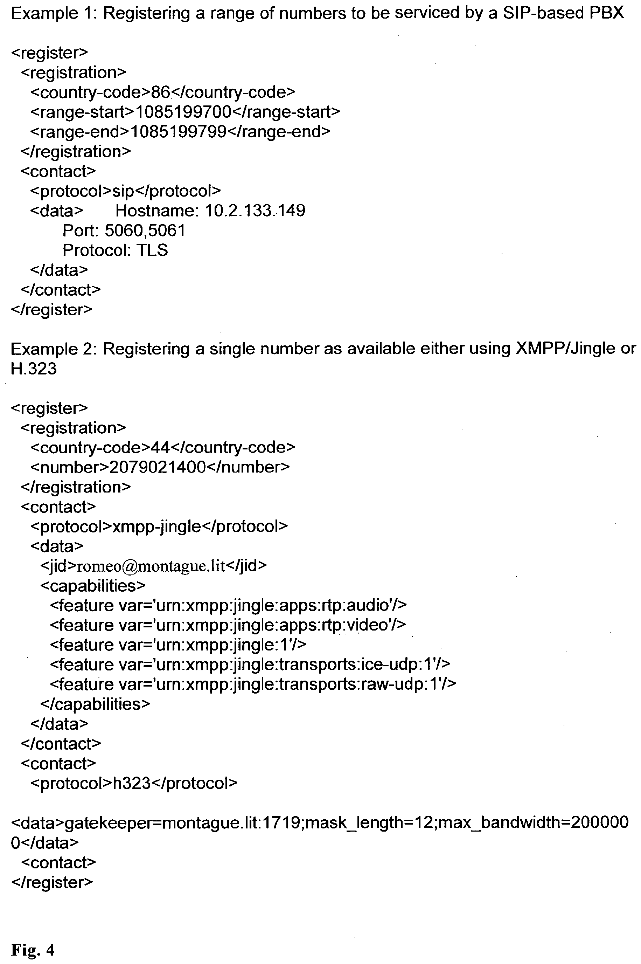

The format of the individual protocol data fields is typically established as some standard via a central authority, or through a system such as RFC. The data will typically be in the form of key/value pairs, and hence well suited to the use of RFC822, or XML. Exemplary embodiments of contact information packets uploaded to the GAD is shown in Fig. 4. Example 1 shows a contact information packet registering a range of numbers, 1085199700 to 1085199799, with a corresponding country code 86. The contact information part of the information packet comprise information on that the registered range of numbers is serviced by a SIP device with IP-number 10.2.133.149 on ports 5060, 5061, using the TLS protocol.

Example 2 shows a contact information packet registering a single number with two different possibilities of contact available, jingle and H.323. As shown in Fig. 4, the sets of protocol data might contain different values depending on the overlaying protocol, e.g. SIP can communicate via UDP, TCP and TLS, thus it might be necessary to communicated which of the underlying protocols that is supported.

As described above, the data field have no objective meaning to the GAD, the data can be registered using different formats, e.g. in Fig. 4, the SIP data are encoded using RFC822, the XMPP/Jingle data are XML stanzas describing the capabilities of the tar end embedded within the XML of the registration message, and the H.323 protocol data expressed in a list of key/value pairs.

Although the contact information is a matter of public record to be provided on external requests, it is evident that uploading contact information is considerably more sensitive, and measures should be taken in order to minimize the ability of malicious or misconfigured third-parties to upload information. Therefore, while the contact information packets can be uploaded to the GAD using any suitable protocol, including Internet based protocols such as HTTP, FTP, SMTP, NNTP and XMPP, it would be useful to use a digitally signed or authenticated and encrypted method.

In an exemplary embodiment of the invention a three tier security measure could be envisaged;
1) Confirmation of identity. An uploading entity might need do supply a usernames and password when uploading contact information to the GAD. This will usually include the use of encrypted transport protocols such as TLS coupled with signed child certificates provided by a root authority (in this case, the administrating authority of the GAD) or other such mature methods of proving identity over an internet connection.
2) Limitations on record-changing. In the event of the above not providing protection (e.g. a valid but misconfigured call server) it is important to limit the changes an uploading entity can make. Sensible limits would be to place a lower bound on the shortness of the prefix that can be registered (e.g. not allowing an entity to register an entire country code such as +44), not allowing any range that encompasses an already existing range, limiting the number of ranges that a single entity can register, etc.
3) Limitations on access. Relative to the number of requests for the contact information, the number of record uploads will be low and less time-critical, hence additional constraints that do not scale well to large number of users might be imposed. One exemplary option is for the authority administrating of the registry to white-list entities allowed to upload contact information to the registry. Another exemplary option is for the administering authority to validate changes in contact information (for instance, by contacting the organization by telephone or email) before applying them. It might even be decided that only the administering authority can upload contact information, and organization that seek to do so must apply in writing, by telephone or by some other method.

An exemplary calling device according to the present invention will typically be aware of its own location so that it can provide a complete telephone number, including area and country code, when querying a GAD. This allows the calling device to dial local numbers without area codes and/or country codes.

In an alternative embodiment the calling device connects to a location-specific GAD, i.e. the caller device contacts a national address registry without needing to include the country code. In this case the nation address registry knows the required information to produce the complete query telephone number.

Further, alongside the number to be called, the contact information request may also include the protocols the caller device supports; this allowing the address registry to filter the protocols it returns to the protocols understood by the calling device, significantly reducing the return packet size in cases where the contact information includes numerous supported protocols.

While any protocol/transport mechanism could be used for the request, UDP is well suited since only a single set of results is returned and lost packets in either direction can be simply handled by the calling device resending the request if, after a certain period, it has not received a response.

As with systems such as DNS, client implementations may cache contact information for external addresses so that later calls to the same number range is made without contacting the address registry. Various strategies known in the art are available to balance the tradeoff between call failures due to out-of-date contact information and polling the address registry with each call (e.g. updating the information after a call failure, updating the information on calling if more than a fixed period has passed since the last successful call, updating the information on calling if more than a fixed period has passed since the last time the information was updated, etc) .

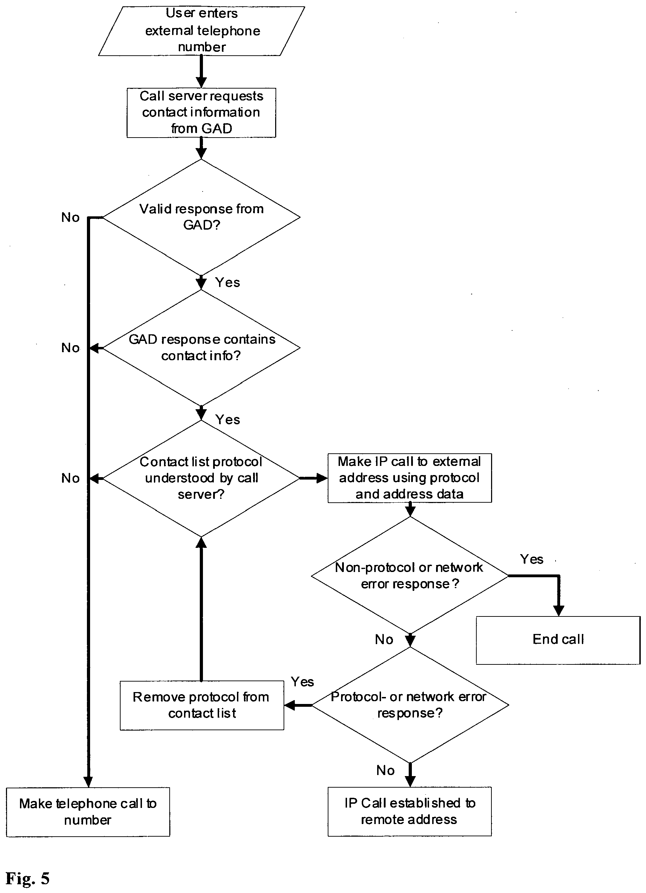

An exemplary method of setting up a call from a calling device to a device in an external organization according to the invention on is described in the following with reference to Fig. 5. The method starts in step 51, where a user of a first calling device enters an external telephone number, and the calling device sets up a connection with a call server, typically at the boundary of the internal network. If the user did not enter the complete phone number, the call server might add area- and/or country code to the entered telephone number.

Then, in step 52, the call server requests contact information from the GAD relating to that number. The GAD might be a single server, but could also comprise of a plurality of geographically dispersed servers as described above. The call server then waits for a valid response from the GAD, step 53.

A valid response from the GAD is either a set of one or more protocol name and data pairs, or a message that no suitable contact protocol data is available (either because the requested number has no associated contact information in the address registry, or data does exist but the request specified a set of protocols it supported and these do not match any of the protocols stored for that entry). The address registry might also return a telephone number range for which the contact information is valid, allowing the calling device and/or call server to cache the information more effectively. If no valid response is received after a certain time, or the GAD response does not contain contact information, step 54, the call server establishes a standard telephone call to the requested number, step 60.

In step 55, the calling server parses the contact information received from the GAD to check whether the call server supports any of the protocols listed in the contact information. If none of the received protocols is supported by the call server, the call server establishes a standard telephone call to the requested number, step 60.

If more than one valid protocol is present, the call server will choose which protocol is best suited; parameters in the contact information may help make this choice (for instance, one set of protocol data may state that it can only accept connections via TLS, which the call server does not support, allowing it to be discarded immediately, while another might state it supports only calls of 384k of lower bandwidth for external calls, making this less attractive than a third protocol with no such bandwidth limit etc.). In an exemplary embodiment, the call server will make a prioritized list over the present supported protocols.

Having selected a preferred protocol, the call server then attempts to establish a call to the external location using the protocol data, step 56. The exact format of this call will be protocol-dependent and defined alongside the format of the protocol data; the protocol data usually include an address, port and other contact information. The definition may also include a method of identifying the remote server of which individual the call should be routed to if needed: the simplest method is to use the complete telephone number as the username, e164 or other protocol user identifier. However, more complex methods such as a mask to apply to the telephone number so that only part of it is sent are also possible.

If in step 58, the call fails due to non-network or non-protocol errors (for example, the individual at the far end chooses to reject the call, the remote server reports that there is no user with that number, etc) the call should fail and other protocols/telephone should not be attempted, and the user should be informed that the call failed and why, step 62.

Then in step 59, if the call cannot be established due to network or protocol errors then the call server removes protocol from the preferred protocol list, step 57, and attempts to establish a call on next most preferred protocol on the list, and so on until there are no protocols remaining at which point the call server establishes a telephone call to the requested number, step 60.

If the call succeeds then the user has been successfully connected with an IP call with all its advantages, step 61.

With reference to Fig. 2 an exemplary call scenario is described in the following. Consider a user A, having access to a calling device E5, that would like to make an IP call, e.g. a video call, to a user B within a different organization. User A does not know whether user B can accept video calls or any other IP calls, user A only has a business card with the phone number of user B. For the ease of argument let say that user B is registered in a GAD, 21, of Fig. 4, example 2.

User A enters the phone number of user B, +44 2079012400, on the calling device E5, which then connects to the call server, 31, of user A's organization. The call server then sends a request to the GAD, 21, requesting contact information data related to the phone number of user B. In this example the call server only supports H.323 and SIP, and request only receiving contact information supporting that protocol. User B, in this case, supports XMPP-Jingle and H.323, but as XMPP-Jingle information is not requested, the GAD transmits the H.323 information to the call server, that is user B can be reached through H.323 on a gatekeeper montague.lit, 32, using extension 1719.

The call server, 31, then connects to gateway, 32, through an IP network, 41, using the H.323 protocol, and the call server 32 connects the call to the communication device E6 of user B, and the IP call is established. If, however, the call server receives network protocol errors when trying to contact the gateway, then the call server will drop the H.323 call and try to set up a phone call to user B.

In another exemplary call scenario, the call server 31 supports both H.323 and XMPP-Jingle, in which case the GAD returns both the H.323 and XMPP-Jingle contact information data. The call server might prefer one of the protocols and make a prioritized protocol call list, or just randomly list the protocols to call. In either case, the call server first attempts one of the protocols, e.g. H.323. The call server then connects to the call server or gateway 32, through the IP network 41 using the H.323 protocol. If the call server receives network protocol errors when trying to connect to the gateway, the call server will drop the H.323 call, and try to establish a call using the next protocol in the list, in this case XMPP-Jingle. Again, if the call server receives network errors, the call server drop the call and try to establish a phone call to user B, otherwise an IP connection using Jingle is established.

In yet another exemplary scenario, user B is not listed in the GAD, the GAD informs the call server that no contact information data is registered for that number, in which case the call server try to establish a phone call to user B using the phone number of the request.

Although the present invention as described has related to telephone numbers, the system could as easily recognizable by a person skilled in the art, with only moderate adjustments, will envision alternate means of identifiers for making calls (Email addresses, social security numbers, national ID numbers, etc).

## Claims

1. A system for establishing a call using a single identifier, said system comprising a registry device (21), a call server (31), and two or more communication devices (11, 12) connected to a communication network (41), wherein
the registry device (21) is configured to:
receive contact information relating to a single identifier or a range of identifiers from an uploading device, the contact information comprising at least two call protocols of contacting a communication device associated with the identifier,
store the contact information received from the uploading device,
on request from the call server (31) for contact information relating to an identifier, retrieve the stored contact information and transmit a message comprising the contact information,
the call server (31) is configured to:
receive a request from a first communication device (11) to establish a call to a second communication device (12) associated with the single identifier,
request from the registry device (21) contact information relating to the single identifier,
receive the contact information relating to the single identifier from the registry device (21), and
establish a call between the first communication device (11) and the second communication device (12) associated with the identifier using one of the at least two call protocols of contacting the second communication device (12); and wherein
the call server (31), if failing on establishing a call between the first communication device (11) and the second communication device (12) associated with the identifier using one of the at least two call protocols of contacting the second communication device (12), is configured to establish the call using a second of the at least two call protocols of contacting the second communication device (12).

2. A system according to claim 1, wherein the contact information comprises at least one IP protocol supported by a communication device (11, 12) associated with the identifier.

3. A system according to one of the preceding claims, wherein the call server (31), when requesting from the registry device (21) contact information relating to the single identifier, is configured to include in the request at least one protocol supported by the call server, optionally wherein the registry device (21), when transmitting a message comprising the contact information, is configured to only include the at least two protocols supported by the call server (31).

4. A system according to one of the preceding claims, wherein the registry device (21), when retrieving the stored contact information relating an identifier and either no suitable protocol exists in the registry or no contact information at all exists in the registry, is configured to transmit a message indicating that no suitable contact information is available.

5. A system according to any one of claim 1 or 4, wherein the call server (31), upon receiving a message that no suitable contact information is available, or the call server has tried to establish a call on all of the available call protocols of contacting the second communication device (12), is further configured to establish a phone call using the identifier as a phone number.

6. A system according to one of the preceding claims, wherein the single identifier is a telephone number, or an e-mail address, or a social security number, or a national ID-number.

7. A method for establishing a call using a single identifier in a system comprising a registry device (21), a call server (31), and two or more communication devices (11, 12) connected to a communication network (41), the method comprising the steps of:
with the registry device (21), receiving contact information relating to a single identifier or a range of identifiers from an uploading device, the contact information comprising at least two call protocols of contacting a communication device associated with the identifier,
in the registry device (21), storing the contact information received from the uploading device,
on request from a call server (31) for contact information relating to an identifier, in the registry, retrieving the stored contact information and transmitting a message comprising the contact information,
with the call server (31), receiving a request from a first communication device (11) to establish a call to a second communication device (12) associated with the single identifier,
with the call server (31), requesting from the registry device (21) contact information relating to the single identifier, with the call server receiving the contact information relating to the single identifier from the registry device (21), and
with the call server (31), establishing a call between the first communication device (11) and the second communication device (12) associated with the identifier using one of the at least two call protocols of contacting the second communication device,
the method further comprising:
the call server (31), if failing on establishing a call between the first communication device (11) and the second communication device (12) associated with the identifier using one of the at least two call protocols of contacting the second communication device (12), establishing the call using a second of the at least two call protocols of contacting the second communication device.

8. A method according to claim 7, wherein the contact information comprises at least one IP protocol supported by a communication device (11, 12) associated with the identifier.

9. A method according to one of the claims 7 or 8, wherein the call server (31), when requesting from the registry device (21) contact information relating to the single identifier, is including in the request at least one protocol supported by the call server, optionally wherein the registry device when transmitting a message comprising the contact information, is including the at least two protocols supported by the call server.

10. A method according to one of the claims 7 to 9, wherein the registry device (21), when retrieving the stored contact information relating an identifier and either no suitable protocol exists in the registry or no contact information at all exists in the registry, is transmitting a message indicating that no suitable contact information is available.

11. A method according to claim 7 or 10, wherein the call server (31), upon receiving a message that no suitable contact information is available, or the call server has tried to establish a call on all of the available call protocols of contacting the second communication device, is establishing a phone call using the identifier as a phone number.

12. A method according to one of claims 7 to 11, wherein the single identifier is a telephone number, or an e-mail address, or a social security number, or a national ID-number.

13. A system according to one of the claims 1 to 6 wherein the call server (31) functions are incorporated in a communication device or wherein the at least two call protocols of contacting a communication device associated with the identifier is at least one of SIP, H.323 and Jingle,

14. A method according to one of the claims 7 to 12, wherein the call server (31) functions are incorporated in a communication device or wherein the at least two call protocols of contacting a communication device associated with the identifier is at least one of SIP, H.323 and Jingle.

## Patentansprüche

1. System zum Aufbau eines Rufs mithilfe einer einzigen Kennung, wobei das genannte System eine Registrierungsvorrichtung (21), einen Rufserver (31) und zwei oder mehrere mit einem Kommunikationsnetzwerk (41) verbundene Kommunikationsvorrichtungen (11, 12) umfasst, wobei
die Registrierungsvorrichtung (21) für Folgendes konfiguriert ist:
Empfangen von Kontaktinformationen bezüglich einer einzigen Kennung oder eines Bereichs von Kennungen von einer Hochladevorrichtung, wobei die Kontaktinformationen mindestens zwei Rufprotokolle zum Kontaktieren einer Kommunikationsvorrichtung umfassen, die der Kennung zugeordnet ist,
Speichern der Kontaktinformationen, die von der Hochladevorrichtung empfangen wurden,
auf Anfrage von dem Rufserver (31) nach Kontaktinformationen bezüglich einer Kennung, Abrufen der gespeicherten Kontaktinformationen und Senden einer Nachricht, die die Kontaktinformationen umfasst,
wobei der Rufserver (31) für Folgendes konfiguriert ist:
Empfangen einer Anforderung von einer ersten Kommunikationsvorrichtung (11), um einen Ruf zu einer zweiten Kommunikationsvorrichtung (12) einzurichten, die der einzelnen Kennung zugeordnet ist,
Anfordern von Kontaktinformationen bezüglich der einzelnen Kennung von der Registrierungsvorrichtung (21),
Empfangen der Kontaktinformationen bezüglich der einzelnen Kennung von der Registrierungsvorrichtung (21) und
Einrichten eines Rufs zwischen der ersten Kommunikationsvorrichtung (11) und der zweiten Kommunikationsvorrichtung (12), die der Kennung zugeordnet ist, mithilfe eines der mindestens zwei Rufprotokolle zum Kontaktieren der zweiten Kommunikationsvorrichtung (12); und wobei
der Rufserver (31), wenn kein Ruf zwischen der ersten Kommunikationsvorrichtung (11) und der zweiten Kommunikationsvorrichtung (12), die der Kennung zugeordnet ist, mithilfe eines der mindestens zwei Rufprotokolle zum Kontaktieren der zweiten Kommunikationsvorrichtung (12) eingerichtet werden kann, dafür konfiguriert ist, den Ruf mithilfe eines zweiten der mindestens zwei Rufprotokolle zum Kontaktieren der zweiten Kommunikationsvorrichtung (12) einzurichten.

2. System nach Anspruch 1, wobei die Kontaktinformationen mindestens ein IP-Protokoll umfassen, das von einer Kommunikationsvorrichtung (11, 12) unterstützt wird, die der Kennung zugeordnet ist.

3. System nach einem der vorhergehenden Ansprüche, wobei der Rufserver (31), wenn Kontaktinformationen bezüglich der einzelnen Kennung von der Registrierungsvorrichtung (21) angefordert werden, so konfiguriert ist, dass er in die Anforderung mindestens ein Protokoll einschließt, das von dem Rufserver unterstützt wird, wobei die Registrierungsvorrichtung (21) optional, wenn eine Nachricht mit den Kontaktinformationen gesendet wird, so konfiguriert ist, dass sie nur die mindestens zwei Protokolle einschließt, die von dem Rufserver (31) unterstützt werden.

4. System nach einem der vorhergehenden Ansprüche, wobei die Registrierungsvorrichtung (21) optional, wenn die gespeicherten Kontaktinformationen, die eine Kennung betreffen, abgerufen werden und entweder kein geeignetes Protokoll in der Registrierung existiert oder überhaupt keine Kontaktinformationen in der Registrierung existieren, so konfiguriert ist, dass sie eine Nachricht sendet, die anzeigt, dass keine geeigneten Kontaktinformationen verfügbar sind.

5. System nach einem der Ansprüche 1 oder 4, wobei der Rufserver (31) nach Erhalt einer Nachricht, dass keine geeigneten Kontaktinformationen vorhanden sind oder wenn der Rufserver versucht hat, einen Ruf auf allen verfügbaren Rufprotokollen einzurichten, um die zweite Kommunikationsvorrichtung (12) zu kontaktieren, ferner dafür konfiguriert ist, einen Telefonanruf mithilfe der Kennung als Telefonnummer einzurichten.

6. System nach einem der vorhergehenden Ansprüche, wobei die einzelne Kennung eine Telefonnummer oder eine E-Mail-Adresse oder eine Sozialversicherungsnummer oder eine nationale ID-Nummer ist.

7. Verfahren zum Herstellen eines Rufs mithilfe einer einzelnen Kennung in einem System, das eine Registrierungsvorrichtung (21), einen Rufserver (31) und zwei oder mehrere mit einem Kommunikationsnetzwerk (41) verbundene Kommunikationsvorrichtungen (11, 12) umfasst, wobei das Verfahren folgende Schritte umfasst:
wobei die Registrierungsvorrichtung (21) Kontaktinformationen bezüglich einer einzelnen Kennung oder eines Bereichs von Kennungen von einer Hochladevorrichtung empfängt, wobei die Kontaktinformationen mindestens zwei Rufprotokolle zum Kontaktieren einer Kommunikationsvorrichtung umfassen, die der Kennung zugeordnet ist,
Speichern der Kontaktinformationen, die von der Hochladevorrichtung empfangen werden, in der Registrierungsvorrichtung (21),
auf Anfrage von einem Rufserver (31) nach Kontaktinformationen bezüglich einer Kennung, Abrufen der gespeicherten Kontaktinformationen in der Registrierung und Senden einer Nachricht, die die Kontaktinformationen umfasst,
wobei der Rufserver (31) eine Anforderung von einer ersten Kommunikationsvorrichtung (11) empfängt, um einen Ruf zu einer zweiten Kommunikationsvorrichtung (12) einzurichten, die der einzelnen Kennung zugeordnet ist,
wobei der Rufserver (31) von der Registrierungsvorrichtung (21) Kontaktinformationen bezüglich der einzelnen Kennung anfordert, wobei der Rufserver die Kontaktinformationen bezüglich der einzelnen Kennung von der Registrierungsvorrichtung (21) empfängt und
wobei der Rufserver (31) einen Ruf zwischen der ersten Kommunikationsvorrichtung (11) und der zweiten Kommunikationsvorrichtung (12), die der Kennung zugeordnet ist, mithilfe eines der mindestens zwei Rufprotokolle zum Kontaktieren der zweiten Kommunikationsvorrichtung einrichtet,
wobei das Verfahren ferner Folgendes umfasst:
der Rufserver (31), wenn ein Ruf zwischen der ersten Kommunikationsvorrichtung (11) und der zweiten Kommunikationsvorrichtung (12), die der Kennung zugeordnet ist, mithilfe eines der mindestens zwei Rufprotokolle zum Kontaktieren der zweiten Kommunikationsvorrichtung (12) nicht eingerichtet werden kann, richtet den Ruf mithilfe eines zweiten der mindestens zwei Rufprotokolle zum Kontaktieren der zweiten Kommunikationsvorrichtung ein.

8. Verfahren nach Anspruch 7, wobei die Kontaktinformationen mindestens ein IP-Protokoll umfassen, das von einer Kommunikationsvorrichtung (11, 12) unterstützt wird, die der Kennung zugeordnet ist.

9. Verfahren nach einem der Ansprüche 7 oder 8, wobei der Rufserver (31), wenn Kontaktinformationen bezüglich der einzelnen Kennung von der Registrierungsvorrichtung (21) angefordert werden, in die Anforderung mindestens ein Protokoll einschließt, das von dem Rufserver unterstützt wird, wobei die Registrierungsvorrichtung optional, wenn eine Nachricht mit den Kontaktinformationen gesendet wird, die mindestens zwei Protokolle einschließt, die von dem Rufserver unterstützt werden.

10. Verfahren nach einem der Ansprüche 7 bis 9, wobei die Registrierungsvorrichtung (21) optional, wenn die gespeicherten Kontaktinformationen, die eine Kennung betreffen, abgerufen werden und entweder kein geeignetes Protokoll in der Registrierung existiert oder überhaupt keine Kontaktinformationen in der Registrierung existieren, eine Nachricht sendet, die anzeigt, dass keine geeigneten Kontaktinformationen verfügbar sind.

11. Verfahren nach Anspruch 7 oder 10, wobei der Rufserver (31) wenn eine Nachricht empfangen wird, dass keine geeigneten Kontaktinformationen verfügbar sind, oder der Rufserver versucht hat, einen Ruf auf allen verfügbaren Rufprotokollen der Kontaktierung der zweiten Kommunikationsvorrichtung einzurichten, einen Telefonanruf mithilfe der Kennung als Telefonnummer einzurichtet.

12. Verfahren nach einem der Ansprüche 7 bis 11, wobei die einzelne Kennung eine Telefonnummer oder eine E-Mail-Adresse oder eine Sozialversicherungsnummer oder eine nationale ID-Nummer ist.

13. System nach einem der Ansprüche 1 bis 6, wobei die Funktionen des Rufservers (31) in einer Kommunikationsvorrichtung integriert sind oder wobei die mindestens zwei Rufprotokolle zur Kontaktierung einer Kommunikationsvorrichtung, die der Kennung zugeordnet ist, mindestens ein SIP-, H.323- oder Jingle-Rufprotokoll sind.

14. Verfahren nach einem der Ansprüche 7 bis 12, wobei die Funktionen des Rufservers (31) in einer Kommunikationsvorrichtung integriert sind oder wobei die mindestens zwei Rufprotokolle zur Kontaktierung einer Kommunikationsvorrichtung, die der Kennung zugeordnet ist, mindestens ein SIP-, H.323- oder Jingle-Rufprotokoll sind.

## Revendications

1. Système d'établissement d'un appel en utilisant un identifiant unique, ledit système comportant un dispositif de registre (21), un serveur d'appels (31), et deux dispositifs de communication (11, 12) ou plus connectés à un réseau de communication (41), dans lequel
le dispositif de registre (21) est configuré pour :
recevoir des informations de contact se rapportant à un identifiant unique ou à un éventail d'identifiants en provenance d'un dispositif de téléchargement vers l'amont, les informations de contact comportant au moins deux protocoles d'appel de mise en contact avec un dispositif de communication associé à l'identifiant,
stocker les informations de contact reçues en provenance du dispositif de téléchargement vers l'amont,
à la demande, en provenance du serveur d'appels (31), d'informations de contact se rapportant à un identifiant, récupérer les informations de contact stockées et transmettre un message comportant les informations de contact,
le serveur d'appels (31) est configuré pour :
recevoir une demande, en provenance d'un premier dispositif de communication (11), d'établissement d'un appel avec un deuxième dispositif de communication (12) associé à l'identifiant unique,
demander, en provenance du dispositif de registre (21), des informations de contact se rapportant à l'identifiant unique,
recevoir les informations de contact se rapportant à l'identifiant unique en provenance du dispositif de registre (21), et
établir un appel entre le premier dispositif de communication (11) et le deuxième dispositif de communication (12) associé à l'identifiant en utilisant l'un parmi lesdits au moins deux protocoles d'appel de mise en contact avec le deuxième dispositif de communication (12) ; et dans lequel
le serveur d'appels (31), en cas d'échec de l'établissement d'un appel entre le premier dispositif de communication (11) et le deuxième dispositif de communication (12) associé à l'identifiant en utilisant l'un desdits au moins deux protocoles d'appel de mise en contact avec le deuxième dispositif de communication (12), est configuré pour établir l'appel en utilisant un deuxième desdits au moins deux protocoles d'appel de mise en contact avec le deuxième dispositif de communication (12).

2. Système selon la revendication 1, dans lequel les informations de contact comportent au moins un protocole IP pris en charge par un dispositif de communication (11, 12) associé à l'identifiant.

3. Système selon l'une quelconque des revendications précédentes, dans lequel le serveur d'appels (31), lors de la demande, en provenance du dispositif de registre (21), d'informations de contact se rapportant à l'identifiant unique, est configuré pour inclure dans la demande au moins un protocole pris en charge par le serveur d'appels, éventuellement dans lequel le dispositif de registre (21), lors de la transmission d'un message comportant les informations de contact, est configuré pour inclure uniquement lesdits au moins deux protocoles d'appel pris en charge par le serveur d'appels (31).

4. Système selon l'une quelconque des revendications précédentes, dans lequel le dispositif de registre (21), lors de la récupération des informations de contact stockées se rapportant à un identifiant et quand soit aucun protocole approprié n'existe dans le registre soit absolument aucune information n'existe dans le registre, est configuré pour transmettre un message indiquant qu'aucune information de contact appropriée n'existe.

5. Système selon l'une quelconque des revendications 1 ou 4, dans lequel le serveur d'appels (31), lors de la réception d'un message comme quoi aucune information de contact appropriée n'existe, ou quand le serveur d'appels a essayé d'établir un appel sur tous les protocoles d'appel disponibles de mise en contact avec le deuxième dispositif de communication (12), est par ailleurs configuré pour établir un appel téléphonique en utilisant l'identifiant comme étant un numéro de téléphone.

6. Système selon l'une quelconque des revendications précédentes, dans lequel l'identifiant unique est un numéro de téléphone, ou une adresse de courrier électronique, ou un numéro de sécurité sociale, ou un numéro d'identité nationale.

7. Procédé d'établissement d'un appel en utilisant un identifiant unique dans un système comportant un dispositif de registre (21), un serveur d'appels (31), et deux dispositifs de communication (11, 12) ou plus connectés à un réseau de communication (41), le procédé comportant les étapes consistant à :
avec le dispositif de registre (21), recevoir des informations de contact se rapportant à un identifiant unique ou à un éventail d'identifiants en provenance d'un dispositif de téléchargement vers l'amont, les informations de contact comportant au moins deux protocoles d'appel de mise en contact avec un dispositif de communication associé à l'identifiant,
dans le dispositif de registre (21), stocker les informations de contact reçues en provenance du dispositif de téléchargement vers l'amont,
à la demande en provenance d'un serveur d'appels (31) d'informations de contact se rapportant à un identifiant, dans le registre, récupérer les informations de contact stockées et transmettre un message comportant les informations de contact,
avec le serveur d'appels (31), recevoir une demande, en provenance d'un premier dispositif de communication (11), d'établissement d'un appel avec un deuxième dispositif de communication (12) associé à l'identifiant unique,
avec le serveur d'appels (31), demander, en provenance du dispositif de registre (21), des informations de contact se rapportant à l'identifiant unique, le serveur d'appels recevant les informations de contact se rapportant à l'identifiant unique en provenance du dispositif de registre (21), et
avec le serveur d'appels (31), établir un appel entre le premier dispositif de communication (11) et le deuxième dispositif de communication (12) associé à l'identifiant en utilisant l'un parmi lesdits au moins deux protocoles d'appel de mise en contact avec le deuxième dispositif de communication ;
le procédé comportant par ailleurs :
avec le serveur d'appels (31), en cas d'échec de l'établissement d'un appel entre le premier dispositif de communication (11) et le deuxième dispositif de communication (12) associé à l'identifiant en utilisant l'un desdits au moins deux protocoles d'appel de mise en contact avec le deuxième dispositif de communication (12), établir l'appel en utilisant un deuxième desdits au moins deux protocoles d'appel de mise en contact avec le deuxième dispositif de communication.

8. Procédé selon la revendication 7, dans lequel les informations de contact comportent au moins un protocole IP pris en charge par un dispositif de communication (11, 12) associé à l'identifiant.

9. Procédé selon l'une quelconque des revendications 7 ou 8, dans lequel le serveur d'appels (31), lors de la demande, en provenance du dispositif de registre (21), d'informations de contact se rapportant à l'identifiant unique, inclut dans la demande au moins un protocole pris en charge par le serveur d'appels, éventuellement dans lequel le dispositif de registre, lors de la transmission d'un message comportant les informations de contact, inclut lesdits au moins deux protocoles d'appel pris en charge par le serveur d'appels.

10. Procédé selon l'une quelconque des revendications 7 à 9, dans lequel le dispositif de registre (21), lors de la récupération des informations de contact stockées se rapportant à un identifiant et quand soit aucun protocole approprié n'existe dans le registre soit absolument aucune information n'existe dans le registre, transmet un message indiquant qu'aucune information de contact appropriée n'existe.

11. Procédé selon la revendication 7 ou la revendication 10, dans lequel le serveur d'appels (31), lors de la réception d'un message comme quoi aucune information de contact appropriée n'existe, ou quand le serveur d'appels a essayé d'établir un appel sur tous les protocoles d'appel disponibles de mise en contact avec le deuxième dispositif de communication, établit un appel téléphonique en utilisant l'identifiant comme étant un numéro de téléphone.

12. Procédé selon l'une quelconque des revendications 7 à 11, dans lequel l'identifiant unique est un numéro de téléphone, ou une adresse de courrier électronique, ou un numéro de sécurité sociale, ou un numéro d'identité nationale.

13. Système selon l'une quelconque des revendications 1 à 6, dans lequel les fonctions du serveur d'appels (31) sont incorporées dans un dispositif de communication ou dans lequel lesdits au moins deux protocoles d'appel de mise en contact avec un dispositif de communication associé à l'identifiant sont au moins l'un parmi les protocoles SIP, H.323 et Jingle.

14. Procédé selon l'une quelconque des revendications 7 à 12, dans lequel les fonctions du serveur d'appels (31) sont incorporées dans un dispositif de communication ou dans lequel lesdits au moins deux protocoles d'appel de mise en contact avec un dispositif de communication associé à l'identifiant sont au moins l'un parmi les protocoles SIP, H.323 et Jingle.
